# EUROPEAN PATENT SPECIFICATION

(11) **EP 2 687 102 B1**
(45) Date of publication and mention of the grant of the patent: **13.12.2017**
(21) Application number: 13189273.9
(22) Date of filing: 25.10.2007
(51) Int. Cl.: A23K 50/80, A23K 10/16, A23K 20/147, A23K 20/163

(54) **Method for improving the colour of fish**
Verfahrung zur Verbesserung der Farbe von Fisch
Procédé d'amelioration de la couleur des poissons

(30) Priority: 25.10.2006 NO 20064871
(43) Date of publication of application: 22.01.2014
(62) Divisional of application: 07834787.9
(73) Proprietor: Ewos Innovation AS, 4335 Dirdal (NO)
(72) Inventor: González Vecino, José Luis, Dr., 4326 Sandnes (NO); Wadsworth, Simon, 9415 Harstad (NO)
(74) Representative: Acapo AS

(56) References cited:
- EP-A1- 0 553 814
- BELGIN HOSSU, SEMIH SALNUR, NEJDET GULTEPE: "The effects of yeast derivatives (Bio-Mos) on growth of gilthead sea bream", 2005, WORLD AQUACULTURE 2005 ABSTRACTS, BALI ,INDONESIA, XP002469846, * the whole document *
- HERMANN J. PHAFF: "My life with yeasts", ANNUAL REVIEW OF MICROBIOLOGY, vol. 40, 1986, pages 1-53, XP002717016, Annual Reviews ISSN: 0066-4227
- Y. AKIBA, K. SATO, AND K. TAKAHASHI: "MEAT COLOR MODIFICATION IN BROILER CHICKENS BY FEEDING YEAST PHAFFIA RHODOZYMA CONTAINING HIGH CONCENTRATIONS OF ASTAXANTHIN", J. APPL. POULT. RES, vol. 10, 2001, pages 154-161, XP002717017,
- DATABASE OCEAN [Online] 2003, PRYOR, G.S. ET AL: "Mannanoligosaccharides in Fish Nutrition: Effects of Dietary Supplementation on Growth and Gastrointestinal Villi Structure in Gulf of Mexico Sturgeon", XP002469850, retrieved from STN Database accession no. 2004:9790 & NORTH AMERICAN JOURNAL OF AQUACULTURE [N. AM. J. AQUACULT.], (20030000) VOL. 65, NO. 2, PP. 106-111. ISSN: 1522-2055., 2003,

## Description

The present invention relates to a method for improving the pigmentation in fish.

Soybean is a viable source of protein replacement for declining fish meal resources and has made a significant contribution for instance to sustainable salmonid aquaculture.

Certain forms of soybean, for instance extracted preparations in fish diets can lead to an increased incidence of pathological changes associated with the hind gut of the fish, especially when fed at higher concentration. These changes include a marked variation in the degree of vacuolation, a loss of gut integrity, sloughing of the mucosa into the gut lumen and infiltration of inflammatory cells into the submucosa. It has been shown that this addition of soy in the fish feed has significantly reduced fish growth, performance, immunity and health.

EP 0553814 describes the use of a feed containing mannans and astaxantin for improving the coloration of salmon.

Belgin Hossu, et al., The effects of yeast derivatives (Bio-Mos) on growth of gilthead sea bream", 2005, World Aquaculture 2005, abstract, describes the production of a feed containing orange colored yeast cell walls comprising mannanoligosaccharides.

Hermann J. Phaff: My life with yeast, Annual review of Microbiology, vol. 40, 1986, pages 1-53 describes that yeast contain cell wall having mannoligosaccharides that can be used to improve the pigmentation..

The aim of the present invention is to find feed components that can improve the pigmentation in fish, by improving the uptake and/or assimilation of pigments in fish, as defined in the claims.

### Figure legends

Figure 1 shows the Astaxanthin content in NQC of Atlantic salmon (*Salmo salar*) fed different treatment 12 weeks post-feeding.
Figure 2 shows Roche Sa/moFan™ score of NQC of Atlantic salmon (*Salmo salar*) fed different treatment 12 weeks post-feeding. Percentage of fish equal of above RSF24, RSF25, RSF26 and RSF27. Combo diet means Nucleotides+MOS+PG diet.
The present invention thus relates to a method for improving the pigmentation in fish, characterized in that said fish is fed a feed containing manna-oligosaccharides, a pigment and normal fish feed ingredients such as proteins, lipids, vitamins, carbohydrates and minerals, and wherein the method improves the uptake and/or assimilation of said pigment in said fish. Preferably, said pigment is astaxanthin. Preferably, said feed also contains a plant protein. Preferably, said plant protein is a soy protein, preferable a soy bean protein. Preferably, said feed further contains a mixture of nucleotides. Preferably, said feed further contains an immunostimulant, such as peptidoglycan. Preferably, said feed comprises soy protein, manna-oligosaccharides (MOS), a mixture of nucleotides and peptidoglycan. Preferably, the manna-oligosaccharide are fed after a period of feeding with a plant protein containing feed, and where the manna-oligosaccharides are fed at least in a period before harvesting of the fish. Preferably, the period for feeding manna-oligosaccharides pre-harvesting is at least 2 weeks, preferably at least 3 weeks, or most preferable at least 4 weeks. Preferably, said fish is salmon.

### Experimental section

### Example 1

### Pigmentation

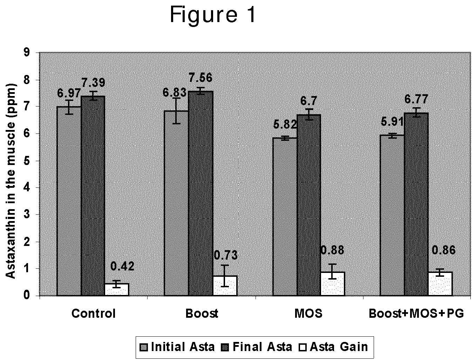

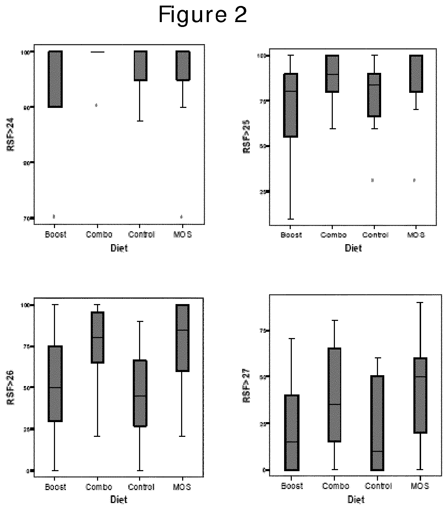

Assessment of pigmentation showed an improved pigmentation uptake with the diets containing MOS and nucleotides. In order to study potential diets were supplemented with 30ppm Asta. Pigment concentration in the muscle (NQC) and Roche *Salmo*Fan ™ were measured at the start and end of the trial in all the treatments by sampling 40 fish per cage at the beginning of the experiment and 80 fish per cage at the end of the study. Colour (Roche *Salmo*Fan ™) was measured on individual NQC (figure 2) and astaxanthin (mg/kg) (figure 1) was measured in pools of 10 fish per replicate cage.

Astaxanthin content in the muscle of MOS and Nucleotides + MOS + PG at the start of the trial was approximately 1ppm bwer than the rest of the groups (Figure 1). This was a consequence of these fish being used in a former pigment trial. Astaxanthin content in these groups at the end of the trial was still lower than the Control and Nucleotides groups. Nevertheless when the pigment gain in muscle was compared between groups, it showed that average pigment gain in the Nucleotides group was 73.8% higher, 109.5% higher in the MOS group and 104.8% in the Nucleotides + MOS + PG group higher than the control group.

This differences in pigmentation also correspond with differences in colour of the fillet. Differences between dietary treatments were observed in the Roche *Salmo*Fan™ (RSF) at harvest. Thus the percentage of fish that reached RSF score equal of above 25 was 88% and 89% in the MOS and Nucleotides+MOS+ PG diets respectively compared to 72% and 78% in the control and Nucleotide groups respectively; these differences were almost significant (p = 0.07). Percentage of fish that reached a RSF score equal of above 26 was 75% in the MOS and in the Nucleotides+MOS+PG diet, significantly higher that the 51% in the Nucleotide group and 47% in the control group; the difference between Nucleotide and control group was not significant. Percentage of fish that reached an RSF score equal of above 27 was 44% and 38% in the MOS and Nucleotide+MOS+PG diet, these values were significantly higher compared to 22% in the control and 21% in the Nucleotide group (Figure 2).

### Conclusions

The results show a significant improvement in growth performance in Atlantic salmon fed MOS (as well as MOS in addition to Nucleotides and immune stimulant), compared to control diets. Without being bound by theory, it is thought that the likely mode of action is to improve gut health and reduce negative effects of plant proteins such as extracted soybean. Improved intestinal health will allow more effective uptake of nutrients across the lumen due to the shorter distance to travel through the tissues, as well as the greater surface area of healthy gut tissue. Improved pigmentation uptake is possibly a result of this effect and this is reflected in fillet coloration.

## Claims

1. A method for improving the pigmentation in fish, **characterized in that** said fish is fed a feed containing manna-oligosaccharides, a pigment and normal fish feed ingredients such as proteins, lipids, vitamins, carbohydrates and minerals, and wherein the method improves the uptake and/or assimilation of said pigment in said fish.

2. A method according to claim 1, wherein said pigment is astaxanthin.

3. A method according to any of the preceding claims, **characterized in that** said feed also contains a plant protein.

4. A method according to claim 3, wherein said plant protein is a soy protein, preferable a soy bean protein.

5. A method according to any of the preceding claims, **characterized in that** said feed further comprises a mixture of nucleotides.

6. A method according to any of the preceding claims, **characterized in that** said feed further comprises an immunostimulant, such as peptidoglycan.

7. A method according to any of the preceding claims, **characterized in that** said feed comprises soy protein, manna-oligosaccharides, a mixture of nucleotides and peptidoglycan.

8. A method according to claim 1, **characterized in that** the manna-oligosaccharide are fed after a period of feeding with a plant protein containing feed, and where the manna-oligosaccharides are fed at least in a period before harvesting of the fish.

9. A method according to claim 8, **characterized in that** the period for feeding manna-oligosaccharides pre-harvesting is at least 2 weeks, preferably at least 3 weeks, or most preferable at least 4 weeks.

10. A method according to any of the preceding claims, wherein said fish is salmon.

## Patentansprüche

1. Verfahren zum Verbessern der Pigmentation in Fischen, **dadurch gekennzeichnet, dass** den Fischen ein Futter gefüttert wird, das Manna-Oligosaccharide, ein Pigment und normale Fischfutterbestandteile, wie etwa Proteine, Lipide, Vitamine, Kohlenhydrate und Mineralien enthält, und wobei das Verfahren die Aufnahme und/oder Assimilation des Pigments in den Fischen verbessert.

2. Verfahren gemäß Anspruch 1, wobei das Pigment Astaxanthin ist.

3. Verfahren gemäß einem der vorhergehenden Ansprüche, **dadurch gekennzeichnet, dass** das Futter auch ein Pflanzenprotein enthält.

4. Verfahren gemäß Anspruch 3, wobei das Pflanzenprotein ein Sojaprotein, bevorzugt ein Sojabohnenprotein, ist.

5. Verfahren gemäß einem der vorhergehenden Ansprüche, **dadurch gekennzeichnet, dass** das Futter ferner eine Mischung aus Nukleotiden beinhaltet.

6. Verfahren gemäß einem der vorhergehenden Ansprüche, **dadurch gekennzeichnet, dass** das Futter ferner ein Immunstimulans, wie etwa Peptidoglycan, beinhaltet.

7. Verfahren gemäß einem der vorhergehenden Ansprüche, **dadurch gekennzeichnet, dass** das Futter Sojaprotein, Manna-Oligosaccharide, eine Mischung aus Nukleotiden und Peptidoglycan beinhaltet.

8. Verfahren gemäß Anspruch 1, **dadurch gekennzeichnet, dass** die Manna-Oligosaccharide nach einer Periode des Füttern mit einem Pflanzenprotein enthaltenden Futter gefüttert werden, und wobei die Manna-Oligosaccharide mindestens in einer Periode vor der Ernte der Fische gefüttert werden.

9. Verfahren gemäß Anspruch 8, **dadurch gekennzeichnet, dass** die Periode für das Füttern der Manna-Oligosaccharide vor dem Ernten mindestens 2 Wochen, bevorzugt mindestens 3 Wochen oder am bevorzugtesten mindestens 4 Wochen, beträgt.

10. Verfahren gemäß einem der vorhergehenden Ansprüche, wobei die Fische Lachse sind.

## Revendications

1. Procédé d'amélioration de la pigmentation chez un poisson, **caractérisé en ce que** ledit poisson est nourri par un aliment qui contient des mannane-oligosaccharides, un pigment et des ingrédients normaux d'aliments pour poissons comme des protéines, des lipides, des vitamines, des hydrates de carbone et des minéraux, et dans lequel le procédé améliore l'absorption et/ou l'assimilation dudit pigment dans ledit poisson.

2. Procédé selon la revendication 1, dans lequel ledit pigment est de l'astaxanthine.

3. Procédé selon l'une quelconque des revendications précédentes, **caractérisé en ce que** ledit aliment contient également une protéine végétale.

4. Procédé selon la revendication 3, dans lequel ladite protéine végétale est une protéine de soja, de préférence une protéine de fève de soja.

5. Procédé selon l'une quelconque des revendications précédentes, **caractérisé en ce que** ledit aliment comprend en outre un mélange de nucléotides.

6. Procédé selon l'une quelconque des revendications précédentes, **caractérisé en ce que** ledit aliment comprend en outre un immunostimulant, comme un peptidoglycane.

7. Procédé selon l'une quelconque des revendications précédentes, **caractérisé en ce que** ledit aliment comprend une protéine de soja, des mannane-oligosaccharides, un mélange de nucléotides et de peptidoglycane.

8. Procédé selon la revendication 1, **caractérisé en ce que** les mannane-oligosaccharides sont donnés après une période d'alimentation avec un aliment contenant une protéine végétale, et dans lequel les mannane-oligosaccharides sont donnés au moins dans une période avant la récolte du poisson.

9. Procédé selon la revendication 8, **caractérisé en ce que** la période d'alimentation des mannanes-oligosaccharides avant la récolte est d'au moins deux semaines, de préférence d'au moins trois semaines ou plus préférablement d'au moins quatre semaines.

10. Procédé selon l'une quelconque des revendications précédentes, dans lequel ledit poisson est le saumon.
